# FASCICULE DE BREVET EUROPEEN

(11) **EP 3 873 777 B1**
(45) Date de publication et mention de la délivrance du brevet: **09.08.2023**
(21) Numéro de dépôt: 19795438.1
(22) Date de dépôt: 31.10.2019
(51) Int. Cl.: B60N 3/00, B60N 3/10, B64D 11/06

(54) **SIÈGE MUNI D'UNE TABLETTE AUXILIAIRE**
SITZ MIT EINEM HILFSTABLETT
SEAT HAVING AN AUXILIARY TABLET

(30) Priorité: 01.11.2018 US 201862754267 P
(43) Date de publication de la demande: 08.09.2021
(73) Titulaire: Safran Seats, 78370 Plaisir (FR)
(72) Inventeur: ARROUM, Houssem, El Dhari Soliman, BP224-8020 (TN); AKKARI, Raouia, El Dhari Soliman, BP224-8020 (TN)
(74) Mandataire: Marconnet, Sébastien
(86) Numéro de dépôt international: PCT/EP2019/079897
(87) Numéro de publication internationale: WO 2020/089423

(56) Documents cités:
- EP-A1- 2 930 108
- WO-A1-87/01998
- DE-A1- 3 942 629

## Description

La présente invention porte sur un siège muni d'une tablette auxiliaire. L'invention trouve une application particulièrement avantageuse, mais non exclusive, avec les sièges d'avion destinés aux classes économiques. Toutefois, l'invention pourra également être mise en oeuvre avec les sièges d'avion destinés aux classes affaires ou avec les sièges d'autres moyens de transport, comme par exemple les sièges installés dans les trains ou les bateaux.

De façon connue en soi, une tablette d'un siège d'avion de la classe économique est montée sur un dossier de siège par l'intermédiaire d'une structure de tablette. La tablette est mobile entre une position stockée dans laquelle la tablette est plaquée contre une face arrière du dossier et une position déployée dans laquelle la tablette s'étend dans un plan sensiblement horizontal pour permettre à un passager de poser des objets sur la face supérieure de la tablette.

Une telle tablette offre toutefois un espace réduit au passager qui souhaite poser ses effets personnels de type téléphone portable, lunettes ou autres, tout en laissant de l'espace pour son plateau repas ou son ordinateur portable. Le passager peut donc être contraint de mettre son téléphone à côté d'un gobelet rempli de liquide constituant un risque d'endommagement ou d'utiliser ses genoux pour poser ses affaires, ce qui n'est pas pratique ni confortable.

Le document DE3942629 décrit une table pliante, notamment destinée à être utilisée sur des sièges d'avions de passagers, comprenant un plateau de table qui peut être déplié pour être utilisé et replié lorsqu'il n'est plus nécessaire.

Le document WO8701998 décrit une table entre sièges de passagers dans les cabines d'avion, les bus ou les lieux similaires, qui est allongée au moyen d'une table supplémentaire qui peut être plus petite que la table principale et adaptée pour tenir des verres, des tasses et autres.

L'invention vise à remédier efficacement à ces inconvénients en proposant un ensemble, notamment pour un avion selon les caractéristiques de la revendication 1.

Selon une réalisation, la tablette auxiliaire est disposée entre la face arrière du dossier de siège et la tablette principale lorsque la tablette auxiliaire est en position relevée et que la tablette principale est en position stockée.

Selon une réalisation, la tablette auxiliaire est montée rotative sur le bras auxiliaire via une liaison pivot.

Selon une réalisation, ledit ensemble comporte un organe élastique pour forcer une rotation du bras auxiliaire de la position stockée vers la position déployée.

Selon une réalisation, le système de verrouillage comporte une came apte à commander un déplacement de la goupille d'une position à une autre.

Selon une réalisation, la tablette auxiliaire comporte un trou pour assurer une fonction de porte-gobelet.

Selon une réalisation, un miroir est disposé au dos de la tablette auxiliaire.

L'invention a également pour objet un siège comportant un ensemble tel que précédemment défini.

L'invention concerne en outre un avion comportant un siège tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'une tablette principale et d'une tablette auxiliaire selon l'invention en position relevée;
[Fig. 2] La figure 2 est une vue en perspective d'une tablette principale et d'une tablette auxiliaire selon l'invention en position déployée;
[Fig. 3] La figure 3 est une vue en perspective éclatée d'un mécanisme de verrouillage d'un bras portant la tablette auxiliaire selon la présente invention;
[Fig. 4] La figure 4 est une vue en coupe longitudinale d'un mécanisme de verrouillage d'un bras portant la tablette auxiliaire selon la présente invention;
[Fig. 5a] [Fig. 5b] [Fig. 5c] [Fig. 5d] Les figures 5a à 5d sont des vues de côté d'un siège selon l'invention ainsi que des vues en coupe transversale du mécanisme de verrouillage lors d'une phase de déploiement de la tablette principale et de la tablette auxiliaire selon l'invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Les termes relatifs de type "horizontal", "vertical", "au-dessus", "en dessous" sont entendus par référence au sens commun que leur donnerait un passager installé sur un siège de la cabine d'avion et ayant un ensemble de tablettes selon l'invention disposé face à lui. Les expressions du type "sensiblement vertical" ou "sensiblement horizontal" signifient qu'il peut exister un écart angulaire de quelques degrés, au maximum 10 degrés, par rapport à la direction à laquelle il est fait référence.

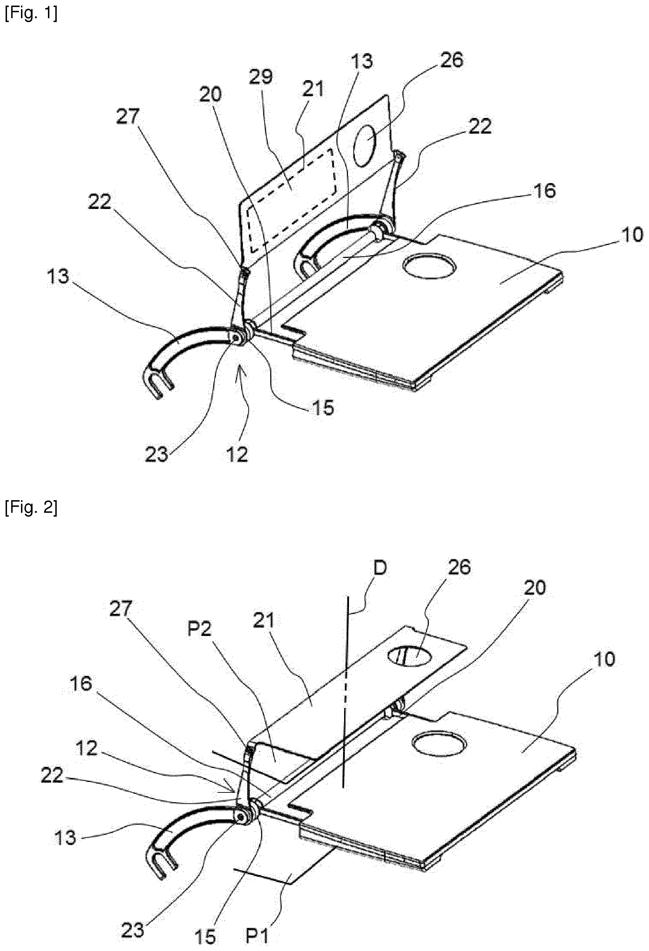

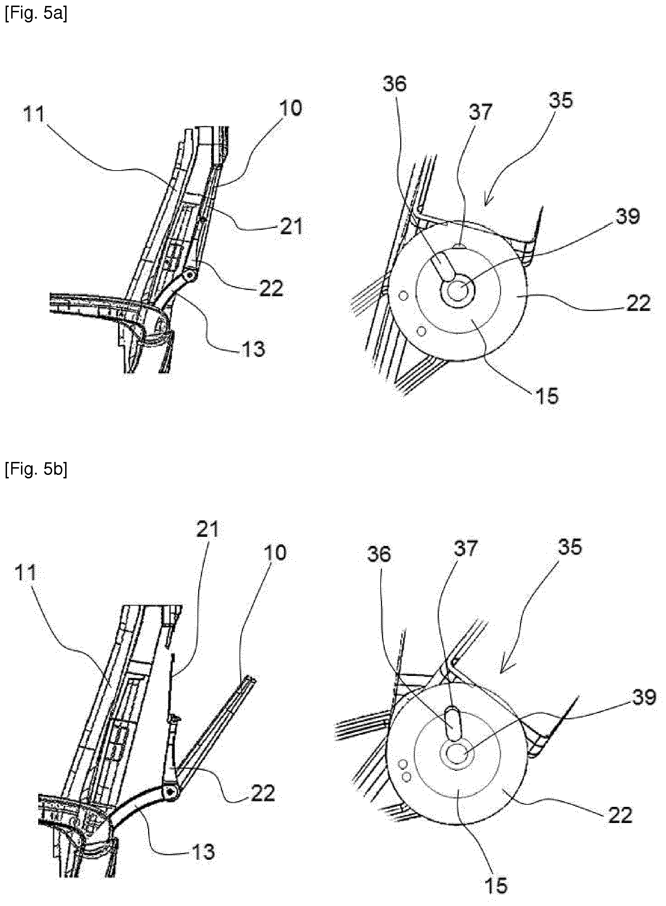

Les figures 1 et 2 montrent une tablette principale 10 destinée à être montée sur un dossier de siège 11 (cf. figure 5a) par l'intermédiaire d'une structure de tablette 12. La tablette principale 10 est mobile entre une position stockée dans laquelle la tablette principale 10 est plaquée contre une face arrière du dossier de siège 11 (cf. figure 5a) et une position déployée dans laquelle la tablette principale 10 s'étend dans un plan sensiblement horizontal pour permettre à un passager de poser des objets sur la face supérieure de ladite tablette principale 10, tel que montré sur les figures 1 et 2.

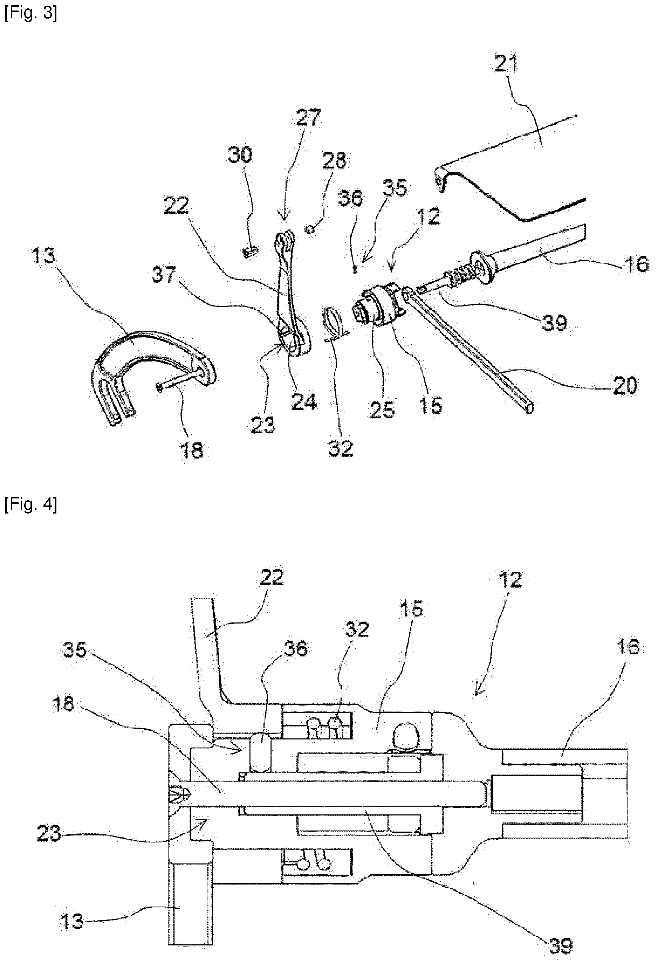

La structure de tablette 12 comporte au moins un bras structurel 13, en l'occurrence deux, disposés de part et d'autre de la tablette principale 10. Un bras structurel 13 présente une première extrémité montée rotative par rapport au dossier de siège 11 et une deuxième extrémité sur laquelle sont fixés un noyau 15 et un axe 16, tel que cela est visible sur la figure 3. Le bras structurel 13, le noyau 15, et l'axe 16 formant la structure de tablette 12 pourront être assemblés au moyen d'un organe de fixation 18, tel qu'une vis où tout autre organe adapté à l'application.

La tablette principale 10 est portée par au moins un bras principal 20, en l'occurrence deux, montés rotatifs par rapport à la structure de tablette 12. La tablette principale 10 pourra être mobile en translation par rapport au bras principal 20. Cela permet d'adapter une distance entre la tablette principale 10 et le passager en fonction du gabarit du passager.

Une tablette auxiliaire 21 est montée sur la structure de tablette 12 par l'intermédiaire d'au moins un bras auxiliaire 22, en l'occurrence deux, disposés de part et d'autre de la tablette auxiliaire 21. La tablette auxiliaire 21 est mobile entre une position relevée dans laquelle la tablette auxiliaire 21 se situe sensiblement dans un prolongement des bras auxiliaires 22, tel que montré sur la figure 1 et une position déployée dans laquelle la tablette auxiliaire 21 est superposée verticalement par rapport à la tablette principale 10, tel que montré sur la figure 2.

Par "superposée verticalement", on entend le fait qu'il existe au moins une droite D perpendiculaire au plan géométrique d'extension P1 de la tablette principale 10 en position déployée qui passe par le plan géométrique d'extension P2 de la tablette auxiliaire 21 en position déployée.

La tablette auxiliaire 21 présente alors une face supérieure sensiblement parallèle à la face supérieure de la tablette principale 10. En position déployée, la tablette auxiliaire 21 s'étend au-dessus de la tablette principale 10.

La tablette auxiliaire 21 pourra comporter un trou 26 pour assurer une fonction de porte-gobelet. En outre, un miroir 29 pourra être disposé au dos de la tablette auxiliaire 21, tel que montré sur la figure 1.

Lorsque le passager ouvre sa tablette principale 10, il découvre la tablette auxiliaire 21 qu'il pourra mettre en position déployée. Si le passager ne souhaite pas utiliser la tablette auxiliaire 21, il pourra la laisser en position relevée.

Plus précisément, comme on peut le voir sur les figures 3 et 4, un bras auxiliaire 22 est monté rotatif sur la structure de tablette 12 via une liaison pivot 23. À cet effet, une extrémité du bras auxiliaire 22 comporte une ouverture 24 dans laquelle est insérée une portion cylindrique du noyau 15 formant un axe de rotation pour le bras auxiliaire 22.

Le bras auxiliaire 22 est mobile en rotation par rapport à la structure de tablette 12 entre une position stockée dans laquelle le bras auxiliaire 22 forme un angle supérieur à 10 degrés par rapport à une direction verticale et une position déployée dans laquelle le bras auxiliaire 22 s'étend sensiblement suivant une direction verticale.

La tablette auxiliaire 21 est montée rotative via une liaison pivot 27 par rapport au bras auxiliaire 22. A cet effet, la tablette auxiliaire 21 est montée sur une extrémité du bras auxiliaire 22 au moyen d'une bague de rotation 28 et d'un organe de fixation 30 formant un axe de rotation pour la tablette auxiliaire 21.

Un organe élastique 32 est relié d'une part à la structure de tablette 12, en particulier au noyau 15, et d'autre part au bras auxiliaire 22 pour forcer une rotation du bras auxiliaire 22 de la position stockée vers la position déployée dans laquelle le bras auxiliaire 22 s'étend sensiblement suivant une direction verticale. L'organe élastique 32 est disposé à l'intérieur d'un logement ménagé dans le noyau 15, tel que cela est montré sur la figure 4. En l'occurrence, l'organe élastique 32 est un ressort de torsion. En variante, l'organe élastique 32 pourra prendre la forme d'un circlips ou tout autre élément élastique adapté à l'application.

Comme on peut le voir sur la figure 3 ainsi que sur les figures 5a à 5d, on prévoit de préférence un système de verrouillage 35 apte à verrouiller le bras auxiliaire 22 dans une position déployée.

Le système de verrouillage 35 comporte à cet effet une goupille 36 mobile entre une position déverrouillée dans laquelle la goupille 36 est dégagée d'une gorge 37 ménagée dans le bras auxiliaire 22 et une position verrouillée dans laquelle la goupille 36 coopère avec la gorge 37 ménagée dans le bras auxiliaire 22 pour maintenir le bras auxiliaire 22 en position déployée.

Une came 39 est apte à commander un déplacement de la goupille 36 d'une position à une autre. La came 39 est liée en rotation avec le bras principal 20 de la tablette principale 10.

On décrit ci-après, en référence avec les figures 5a à 5d, une phase de déploiement de l'ensemble formé par la tablette principale 10 et la tablette auxiliaire 21 portées par la structure de tablette 12.

Sur la figure 5a, la tablette principale 10 est en position stockée et la tablette auxiliaire 21 est en position relevée. La tablette auxiliaire 21 est alors disposée entre la face arrière du dossier 11 et la tablette principale 10.

Comme cela est représenté sur la figure 5b, lors du déploiement de l'ensemble, la tablette principale 10 s'éloigne du dossier 11 du fait de la rotation du bras structurel 13 par rapport au dossier 11 via son extrémité inférieure ainsi que la rotation de la tablette principale 10 par rapport à l'extrémité supérieure du bras structurel 13. En outre, le bras auxiliaire 22 se met automatiquement en position du fait de l'action du ressort de traction 32.

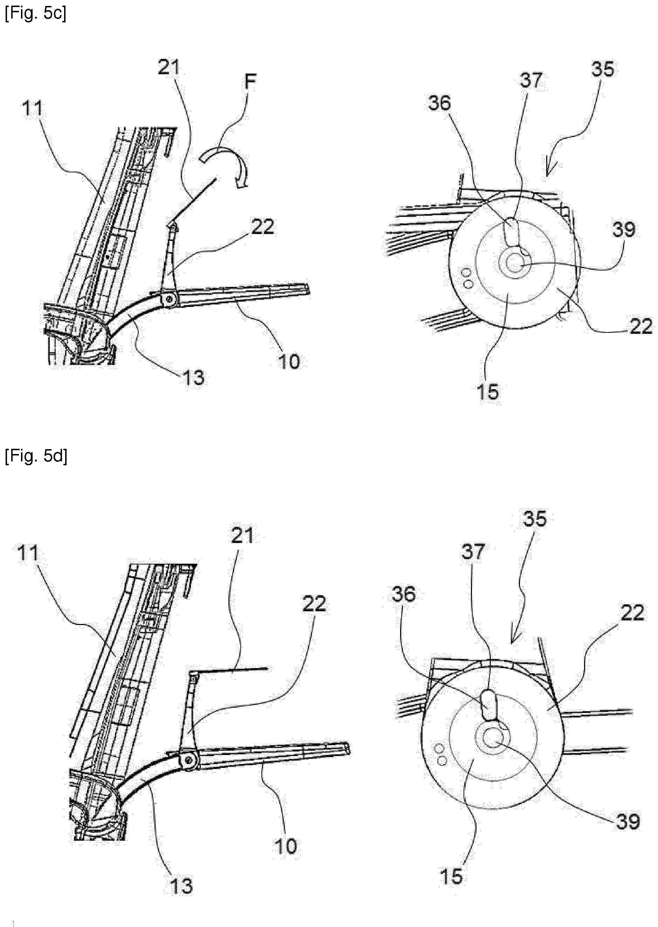

Comme cela est représenté sur la figure 5c, la rotation du bras principal 20 avec la came 39 par rapport à la structure de tablette 12 engendre le déplacement de la goupille 36 à l'intérieur de la gorge 37 de façon à verrouiller le bras auxiliaire 22 en position verticale. La tablette principale 10 est en position déployée tandis que la tablette auxiliaire 21 est déplacée en rotation, suivant la flèche F, par rapport aux bras auxiliaire 22 de façon à passer de la position relevée à la position déployée.

Comme cela est représenté sur la figure 5d, la tablette principale 10 et la tablette auxiliaire 21 se trouvent alors toutes deux en position déployée.

Des mouvements de déplacement inverses permettent de déverrouiller le bras auxiliaire 22 et de remettre la tablette principale 10 et la tablette auxiliaire 21 respectivement en position stockée et en position relevée.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que revendiquée.

## Revendications

1. Ensemble, notamment pour un avion, comportant
- un dossier de siège (11),
- une tablette principale (10) montée sur le dossier de siège (11) par l'intermédiaire d'une structure de tablette (12), ladite tablette principale (10) étant mobile entre une position stockée dans laquelle la tablette est plaquée contre une face arrière du dossier de siège (11) et une position déployée,
ledit ensemble comportant en outre une tablette auxiliaire (21) montée sur la structure de tablette (12) par l'intermédiaire d'au moins un bras auxiliaire (22), ladite tablette auxiliaire (21) étant mobile entre une position relevée et une position déployée dans laquelle la tablette auxiliaire (21) est superposée verticalement par rapport à la tablette principale (10),
**caractérisé en ce que**
le bras auxiliaire (22) est monté rotatif sur la structure de tablette (12) via une liaison pivot (27) entre une position stockée et une position déployée dans laquelle le bras auxiliaire (22) s'étend sensiblement suivant une direction verticale,
ledit ensemble comporte en outre un système de verrouillage (35) du bras auxiliaire (22) dans la position déployée,
et **en ce que** ledit système de verrouillage (35) comporte une goupille (36) mobile entre une position déverrouillée dans laquelle la goupille (36) est dégagée d'une gorge (37) ménagée dans le bras auxiliaire (22) et une position verrouillée dans laquelle la goupille (36) coopère avec la gorge (37) ménagée dans le bras auxiliaire (22).

2. Ensemble selon la revendication 1, **caractérisé en ce que** la tablette auxiliaire (21) est disposée entre la face arrière du dossier de siège (11) et la tablette principale (10) lorsque la tablette auxiliaire (21) est en position relevée et que la tablette principale (10) est en position stockée.

3. Ensemble selon la revendication 1 ou 2, **caractérisé en ce que** la tablette auxiliaire (21) est montée rotative sur le bras auxiliaire (22) via une liaison pivot (27).

4. Ensemble selon l'une quelconque des revendications 1 à 3, **caractérisé en ce qu'**il comporte un organe élastique (32) pour forcer une rotation du bras auxiliaire (22) de la position stockée vers la position déployée.

5. Ensemble selon l'une quelconque des revendications 1 à 4, **caractérisé en ce que** le système de verrouillage (35) comporte une came (39) apte à commander un déplacement de la goupille (36) d'une position à une autre.

6. Ensemble selon l'une quelconque des revendications 1 à 5, **caractérisé en ce que** la tablette auxiliaire (21) comporte un trou (26) pour assurer une fonction de porte-gobelet.

7. Ensemble selon l'une quelconque des revendications 1 à 6, **caractérisé en ce qu'**un miroir (29) est disposé au dos de la tablette auxiliaire (21).

8. Siège comportant un ensemble tel que défini selon l'une quelconque des revendications précédentes.

9. Avion comportant un siège tel que défini selon la revendication précédente.

## Patentansprüche

1. Anordnung, insbesondere für ein Flugzeug, umfassend
- eine Sitzlehne (11),
- eine Hauptklappe (10), die über eine Klappenstruktur (12) an der Sitzlehne (11) montiert ist, wobei die Hauptklappe (10) zwischen einer verstauten Position, in der die Klappe gegen eine Rückseite der Sitzlehne (11) gedrückt wird, und einer ausgefahrenen Position beweglich ist,
wobei die Anordnung weiterhin eine Hilfsklappe (21) umfasst, die über mindestens einen Hilfsarm (22) an der Klappenstruktur (12) montiert ist, wobei die Hilfsklappe (21) zwischen einer angehobenen Position und einer ausgefahrenen Position, in der die Hilfsklappe (21) gegenüber der Hauptklappe (10) vertikal überlagert ist, bewegbar ist,
**dadurch gekennzeichnet, dass**
der Hilfsarm (22) über eine Schwenkverbindung (27) zwischen einer verstauten Position und einer ausgefahrenen Position, in der sich der Hilfsarm (22) im Wesentlichen in vertikaler Richtung erstreckt, drehbar an der Klappenstruktur (12) montiert ist,
wobei die Anordnung außerdem ein Verriegelungssystem (35) für den Hilfsarm (22) in der ausgefahrenen Position umfasst,
und das Verriegelungssystem (35) einen Stift (36) umfasst, der zwischen einer entriegelten Position, in der der Stift (36) außer Eingriff mit einer Nut (37) im Hilfsarm (22) ist, und einer verriegelten Position, in der der Stift (36) mit der Nut (37) im Hilfsarm (22) zusammenwirkt, beweglich ist.

2. Anordnung nach Anspruch 1, **dadurch gekennzeichnet, dass** die Hilfsklappe (21) zwischen der Rückseite der Sitzlehne (11) und der Hauptklappe (10) angeordnet ist, wenn die Hilfsklappe (21) in der angehobene Position ist, und die Hauptklappe (10) in der verstauten Position ist.

3. Anordnung nach Anspruch 1 oder 2, **dadurch gekennzeichnet, dass** die Hilfsklappe (21) über eine Schwenkverbindung (27) drehbar am Hilfsarm (22) gelagert ist.

4. Anordnung nach einem der Ansprüche 1 bis 3, **dadurch gekennzeichnet, dass** sie ein elastisches Element (32) umfasst, um eine Drehung des Hilfsarms (22) von der verstauten Position in die ausgefahrenen Position zu erzwingen.

5. Anordnung nach einem der Ansprüche 1 bis 4, **dadurch gekennzeichnet, dass** das Verriegelungssystem (35) einen Nocken (39) umfasst, der eine Bewegung des Stifts (36) von einer Position in eine andere steuern kann.

6. Anordnung nach einem der Ansprüche 1 bis 5, **dadurch gekennzeichnet, dass** die Hilfsklappe (21) ein Loch (26) zur Bereitstellung einer Getränkehalterfunktion aufweist.

7. Anordnung nach einem der Ansprüche 1 bis 6, **dadurch gekennzeichnet, dass** auf der Rückseite der Hilfsklappe (21) ein Spiegel (29) angeordnet ist.

8. Sitz, der eine Anordnung gemäß einem der vorhergehenden Ansprüche umfasst.

9. Flugzeug, das einen Sitz gemäß der Definition im vorhergehenden Anspruch umfasst.

## Claims

1. An assembly, in particular for an aircraft, comprising
- a seat back (11),
- a main flap (10) mounted on the seat back (11) via a flap structure (12), said main flap (10) being movable between a stored position in which the flap is pressed against a rear face of the seat back (11) and a deployed position,
said assembly further comprising an auxiliary flap (21) mounted on the flap structure (12) via at least one auxiliary arm (22), said auxiliary flap (21) being movable between a raised position and a deployed position in which the auxiliary flap (21) is vertically superimposed with respect to the main flap (10),
**characterized in that** the auxiliary arm (22) is rotatably mounted on the flap structure (12) via a pivot connection (27) between a stored position and an deployed position in which the auxiliary arm (22) extends substantially in a vertical direction,
said assembly further comprises a locking system (35) of the auxiliary arm (22) in the deployed position,
and said locking system (35) comprises a pin (36) movable between an unlocked position in which the pin (36) is disengaged from a groove (37) in the auxiliary arm (22) and a locked position in which the pin (36) cooperates with the groove (37) in the auxiliary arm (22).

2. The assembly according to Claim 1, **characterized in that** the auxiliary flap (21) is arranged between the rear face of the seat back (11) and the main flap (10) when the auxiliary flap (21) is in the raised position and the main flap (10) is in the stored position.

3. The assembly according to Claim 1 or 2, **characterized in that** the auxiliary flap (21) is rotatably mounted on the auxiliary arm (22) via a pivot connection (27) .

4. The assembly according to any one of the claims 1 to 3, **characterized in that** it comprises an elastic member (32) for forcing a rotation of the auxiliary arm (22) from the stored position to the deployed position.

5. The assembly according to any one of the claims 1 to 4, **characterized in that** the locking system (35) comprises a cam (39) capable of controlling a movement of the pin (36) from one position to another.

6. The assembly according to any one of the claims 1 to 5, **characterized in that** the auxiliary flap (21) has a hole (26) for providing a cup holder function.

7. The assembly according to any one of the claims 1 to 6, **characterized in that** a mirror (29) is arranged on the back of the auxiliary flap (21).

8. A seat comprising an assembly as defined in any one of the preceding claims.

9. An aircraft comprising a seat as defined according to the preceding claim.
